# EUROPÄISCHE PATENTSCHRIFT

(11) **EP 0 659 829 B1**
(45) Veröffentlichungstag und Bekanntmachung des Hinweises auf die Patenterteilung: **09.09.1998**
(21) Anmeldenummer: 94119278.3
(22) Anmeldetag: 07.12.1994
(51) Int. Cl.: C08L 51/00, C08J 5/18

(54) **Witterungsfolie und damit beschichteter Formkörper**
Weather-resistant sheet and articles coated therewith
Feuille résistante aux intempéries et articles moulés qui en sont recouverts

(30) Priorität: 14.12.1993 DE 9319153 U
(43) Veröffentlichungstag der Anmeldung: 28.06.1995
(73) Patentinhaber: Röhm GmbH, 64293 Darmstadt (DE)
(72) Erfinder: Geppert, Barbara, D-65199 Wiesbaden (DE); Numrich, Uwe, D-64331 Weiterstadt (DE)

(56) Entgegenhaltungen:
- EP-A- 0 528 196
- US-A- 4 576 870
- DATABASE WPI Section Ch, Week 9332, Derwent Publications Ltd., London, GB; Class A14, AN 93-252860 'Weather resistant acrylic resin film ...' & JP-A-5 170 941 (MITSUBISHI RAYON CO LTD.) 9. Juli 1993

## Beschreibung

Die Erfindung betrifft eine witterungsbeständige klare Kunststofffolie, die sich zum Kaschieren von festen Formkörpern zu deren Schutz vor UV-Strahlung und vor Witterungseinflüssen eignet. Sie betrifft weiterhin die damit beschichteten Formkörper.

### Stand der Technik

Es ist allgemein bekannt, Formkörper aus witterungs- und UV-Strahlungs-empfindlichen Werkstoffen zum Schutz ihrer Oberfläche mit einer schützenden Überzugsschicht zu versehen. Üblicherweise enthalten derartige Überzugsschichten einen von Natur aus besonders witterungsbeständigen Kunststoff und ein darin enthaltenes UV-Absorptionsmittel.

Ein Beispiel für witterungs- und UV-empfindliche Werkstoffe ist Bisphenol-A-Polycarbonat. Es wird nach DE 1694237 mit einer Lackschicht aus Polymethylmethacrylat (PMMA) und einem UV-Absorber geschützt. Die Technik der Lackbeschichtung hat den Nachteil, daß sie eine Beschichtungs- und Trocknungsanlage sowie eine Anlage zur Rückgewinnung der aus dem Lack verdampften organischen Lösemittel erfordert. Es bereitet oft Schwierigkeiten, eine solche Lackieranlage unmittelbar hinter einer Extrusionsanlage aufzustellen, um etwa eine kontinuierlich extrudierte Bahn aus Polycarbonat "in line" zu beschichten. Die Lackieranlage muß häufig der Geometrie der extrudierten Bahn genau angepaßt werden, so daß beim Übergang auf ein anderes Extrusionsprofil nicht nur die Extrusionsdüse nebst Kalibriervorrichtung sondern zusätzlich auch noch die Lackieranlage ausgetauscht werden muß. Daher hat sich die Schutzlackierung extrudierter Polycarbonatprofile nicht allgemein durchsetzen können.

Ein anderes Verfahren zur Erzeugung einer UV-schützenden Schicht ist die Koextrusions einer Kunststoffbahn zusammen mit einer Deckschicht, die einen UV-Absorptionsmittel enthält. Man benötigt eine Koextrusionsdüse und einen oder mehrere zusätzliche Extruder zur Erzeugung der Koextrusionsschichten. Nach DE-PS 3244953 werden zwei Deckschichten benötigt, um den Verlust an flüchtigen UV-Absorptionsmitteln zu vermeiden. Vorteilhaft ist der Einsatz von schwerflüchtigen, insbesondere von polymergebundenen UV-Absorbern. Bei allen Koextrusionsverfahren besteht die Schwierigkeit, eine Schutzschicht von der erwünschten geringen Dicke und hohen Gleichmäßigkeit herzustellen. Es sind schon verschiedene komplizierte Meß- und Steuerungsvorrichtungen zur Erzeugung einer befriedigenden Koextrusionsschicht entwickelt worden.

Polycarbonat-Kunststoffkörper mit einer lackierten oder koextrudierten Deckschicht aus schlagzäh modifiziertem PMMA mit einem Gehalt an homogen darin verteilten oder polymergebundenen UV-Absorptionsmitteln sind aus EP-B 368 094 bekannt.

Die beim Lackieren und bei der Koextrusion auftretenden Schwierigkeiten lassen sich vermeiden, wenn eine witterungsbeständige, UV-absorbierende Folie getrennt hergestellt und auf den zu schützenden Grundkörper aufkaschiert wird. Ein solches Verfahren ist in der EP-A 569 878 beschrieben. Obwohl die getrennte Folienherstellung und die anschließende Kaschierung eigene Arbeitsgänge erforderlich machen, haben die Gewährleistung gleichbleibender, technisch vollkommener Überzugseigenschaften sowie die größere Gestaltungsfreiheit unbestreitbare Vorteile im Vergleich zur Koextrusion, die dazu geführt haben, daß sich ein Markt für Witterungsschutzfolien entwickelt hat.

In EP-B 203 487 werden Lacke, Koextrusionsschichten und Kaschierfolien aus einer Polymermischung aus Polycarbonat und einem Copolymer aus Methylmethacrylat und einem äthylenisch ungesättigten, radikalisch polymerisierbaren Monomer mit einer UV-absorbierenden Gruppe als gleichwertige UV-Schutzschichten beispielsweise für Polycarbonatplatten beschrieben. Durch die besondere Polymermischung soll eine verbesserte Haftung an Polycarbonat erreicht werden.

Auch die Verwendung von Kaschierfolien als UV-schützendes Überzugsmittel ist mit Nachteilen verbunden. Es ist schwierig, eine Kaschierfolie ebenso dauerhaft mit einem Grundkörper zu verbinden wie eine lackierte oder koextrudierte Beschichtung. Das gilt sowohl für thermisch kaschierte Folien, die unter Anwendung von Hitze und Druck auf die Oberfläche eines festen Grundkörpers aufgebracht werden, als auch für Folien, die mittels einer druckempfindlichen Kleberschicht befestigt werden. In beiden Fällen zeigen sich häufig nach längerer Bewitterung - verstärkt bei gleichzeitiger mechanischer Beanspruchung - Ablösungserscheinungen, die meistens von den Rändern ausgehen und allmählich weiter in die Fläche fortschreiten. Vor allem sind Blasenbildungen unerwünscht, da sie das optische Erscheinungsbild empfindlich stören.

EP 528 196 (Röhm GmbH) beschreibt eine mattierte Polymethacrylat-Folie aus einer Hartphase aus PMMA und einer Zähphase aus einem Alkylacrylat sowie den Phasen heterogen verteilten Körpern zur Erzeugung des Matteffekts. Der UV-Schutz der matten Folie erfolgt durch einpolymerisieren eines UV-Absorbers.

### Aufgabe und Lösung

Der Erfindung liegt die Aufgabe zugrunde, eine UV-schützende, witterungsbeständige klare Kaschierfolie und damit ausgerüstete Formkörper zur Verfügung zu stellen, die die Nachteile bekannter Kaschierfolien nicht aufweisen. Wichtig ist, daß die Klarheit auch unter Belastung durch Schlag und Stoß und bei Feuchtigkeitseinwirkung erhalten bleibt und daß die aufkaschierte Folie ihre gute Haftung am Grundkörper auch nach langwährender Bewitterung beibehält.

Eine weißbruchfreie Kunststofffolie mit den Merkmalen gemäß dem Oberbegriff des Patentanspruches ist schon aus der DE-PS 38 42 796 bekannt. Wesentlich für ihre vorteilhaften Eigenschaften ist neben dem zweiphasigen Aufbau die geringe Größe der Zähphasenteilchen und die Art ihrer Vernetzung, die hohe Einheitlichkeit der Teilchengröße, die chemische Verknüpfung zwischen Hart- und Zähphase und der niedrige Gehalt an wasserlöslichen Bestandteilen. Die Ausrüstung einer solchen Folie mit UV-Absorptionsmitteln ist dort nicht erwähnt.

Es hat sich nun gezeigt, daß die Haftfestigkeit der Kaschierung mit einer derartigen Folie wesentlich davon abhängt, wie das UV-Absorptionsmittel in der Folie enthalten ist. Es wurde gefunden, daß eine dauerhafte und witterungsbeständige Haftung der Kaschierfolie erreicht wird, wenn die Hartphase des schlagzähen Kunststoffes aus Methylmethacrylat oder dessen Gemisch mit höchstens 20 Gew.-% eines n-Alkylacrylats mit 1 bis 4 Kohlenstoffatomen im Alkylrest und zum verbleibenden Teil aus polymerisierten Einheiten eines äthylenisch ungesättigten, radikalisch polymerisierbaren Monomeren mit einer UV-Strahlung absorbierenden Gruppe in einer solchen Menge aufgebaut ist, daß die Folienschicht wenigstens 98 % der einfallenden UV-Strahlung einer Wellenlänge von 290 bis 370 nm absorbiert.

Mit dieser Folie kaschierte Dekorfolien aus PVC zeigten nach 10.000 bis 15.000 Stunden Xenotest-Bewitterung keine Veränderung, und auch nach 20.000 Stunden keine Blasenbildung und keine Ablösungen an den Rändern.

Typische UV-strahlungs- oder witterungsempfindliche Substrate, die mit den erfindungsgemäßen Folien geschützt werden können, sind Formkörper aus Kunststoff, wie Platten, Folien, Hohlkammerplatten oder sonstige Profile aus Bisphenol-A-Polycarbonat, Polyvinylchlorid, Polyestern, Polyolefinen, Polystyrol oder Celluloseestern, ferner komplexe Strukturen wie retroreflektierende Folien oder Beschichtungen. Auch die Oberflächen von Edelhölzern, Textilien, gegebenenfalls bedrucktem Papier und Karton oder von Metallen können damit geschützt werden. Gleichzeitig wird eine gegebenenfalls verwendete Kleberschicht, mit der die Folie auf dem Substrat angebracht ist, vor dem Abbau durch Strahlung geschützt. Solche Schichten können durch einen Farbstoff- oder Pigmentgehalt oder durch ein rückseitig aufgedrucktes Muster gleichzeitig dazu dienen, die Oberfläche des Substrats farblich oder dekorativ auszugestalten.

### Aufbau und Herstellung des schlagzähen Kunststoffs

Als wesentliche Komponente, die in den Kaschierfolien gemäß DE-PS 38 42 796 nicht enthalten ist, sind am Aufbau des Hartphasen-Kunststoffes Einheiten eines äthylenisch ungesättigten, radikalisch polymerisierbaren Monomeren mit einer UV-Strahlung absorbierenden Gruppe beteiligt. Typische Monomere dieser Art enthalten Gruppen mit hoher Absorption im Wellenlängenbereich von 290 bis 370 nm. Bevorzugt sind Monomere, deren UV-Absorption in Form einer 5 mm dicken Schicht einer Lösung in Chloroform (Spektroskopie-Qualität) bei einer Konzentration von 0,002 Gew.-% wenigstens 10 % beträgt. Geeignet sind z.B. Derivate des 2-Hydroxybenzophenons, des Hydroxyacetophenons, des Cyano-β,β-diphenyls, der Hydroxybenzoesäureester, des Oxanilids, der p-Aminobenzoesäureester oder der 6,8-Dialkyl-4-oxo-5-chromanylverbindungen. Als äthylenisch ungesättigte, radikalisch polymerisierbare Gruppen enthalten diese Monomeren vorzugsweise Acryl-, Methacryl-, Allyl- oder Vinylgruppen. Beispiele geeigneter Monomerer sind:
2-(Cyano-β,β-diphenylacryloyloxy)ethyl-1-methacrylat
2-(2'-Hydroxy-3'-methacrylamidomethyl-5'-octylphenyl) -benztriazol
2-Hydroxy-4-(2-hydroxy-3-methacrylolyloxy)propoxybenzophenon
2-(alpha-Cyano-β,β-diphenylacryloyloxy)ethyl-2-methacrylamid
2-Hydroxy-4-methacryloyloxybenzophenon
2-Hydroxy-4-acryloyloxyethyloxybenzophenon
N-(4-Methacryloylphenol) -N'-(2-ethylphenyl)oxalsäurediamid
4-Ethyl-alpha-cyano-β-phenylzimtsäure-vinylester
2-(2-Hydroxy-5-vinylphenyl)-2-benztriazol

Der Anteil des UV-absorbierenden Monomeren an dem Hartphasenpolymerisat ist erfindungsgemäß so hoch zu wählen, daß die Folienschicht wenigstens 98 % der einfallenden UV-Strahlung einer Wellenlänge von 290 bis 370 nm absorbiert. Die dafür erforderliche Konzentration hängt von der Schichtdicke und der Wirksamkeit des Monomeren ab. Sie liegt in der Regel zwischen 0,1 und 2 Gew.-%, bezogen auf das Gewicht der Hartphase.

Der Hauptbestandteil der Hartphase sind polymerisierte Einheiten des Methylmethacrylats. Unter den gegebenenfalls als Comonomere vorhandenen n-Alkylacrylaten sind diejenigen mit 1 bis 4 Kohlenstoffatomen im Alkylrest bevorzugt.

Im übrigen gelten für den Aufbau und die Herstellung des schlagzähen Kunststoffes die Ausführungen der DE-PS 38 42 796 in entsprechender Weise, so daß der Inhalt dieser Patentschrift zur Offenbarung der vorliegenden Erfindung beiträgt. Bei der Herstellung des Zähphasenpolymerisats ist der Einsatz eines Pfropfvernetzers oder eines vernetzenden Monomeren mit drei oder mehr äthylenisch ungesättigten, radikalisch polymerisierbaren Resten bevorzugt. Ein Zähphasenanteil von 25 bis 75 Gew.-%, bezogen auf den schlagzähen Kunststoff, ist vorteilhaft für die Herstellung von geschmeidigen Folien.

### Eigenschaften und Herstellung der Kaschierfolie

Die Kaschierfolie hat eine gleichmäßige Dicke von 0,05 bis 1,0 mm, vorzugsweise 0,05 bis 0,5 mm. Die Oberflächen sind vorzugsweise glänzend. Eine Breite von 0,5 bis 1,5 m ist zweckmäßig und für die meisten Anwendungen ausreichend. Die Folie kann aus der Schmelze des schlagzähen Kunststoffes nach bekannten Verfahren hergestellt werden. Sie wird in der Regel durch eine Schlitzdüse extrudiert und auf einem Walzenstuhl geglättet und gleichzeitig unter die Erweichungstemperatur gekühlt.

Die zur Kaschierung auf ein Substrat vorgesehene Seite der Folie kann unbehandelt bleiben und ist dann unter Anwendung von Druck und Wärme thermisch kaschierbar. Eine gute Verbindung wird erreicht, wenn die zu verbindenden Oberflächen der Folie und des Substrats Temperaturen von 140 bis 170^{o}C, vorzugsweise etwa 150^{o}C erreichen. Ein Druck von 2 bis 10 kp/cm² ist ausreichend.

Zum Kaschieren bei niedrigeren Temperaturen kann eine z.B. 0,005 bis 0,05 mm dicke Schicht eines druckempfindlichen Klebers aufgebracht und bis zur Verwendung mit einer abziehbaren Schutzfolie überdeckt werden. Vorzugsweise wird für diesen Zweck eine weiche Polyacrylatdispersion mit einer Erweichungstemperatur unter 0^{o}C aufgebracht und unter Filmbildung getrocknet. Für etwas höhere Kaschiertemperaturen können Schmelzkleberschichten mit Erweichungstemperaturen von z.B. 50 bis 80^{o}C verwendet werden, die bei Raumtemperatur nicht klebrig sind und keiner Schutzfolie bedürfen. Gebräuchliche Schmelzkleber, die auch pigmentiert werden können, enthalten Polyurethane, Polyamide, Nitrocellulose, Ethylen-Vinylacetat-Copolymere und Polymerisate oder Copolymerisate des Vinylidenchlorids.

Die Oberseite der Kaschierfolie kann dem vorgesehenen Anwendungszweck entsprechend in mannigfaltiger Weise modifiziert werden. Von besonderem Interesse sind kratzfeste und wasserspreitende Beschichtungen.

### Kratzfestbeschichtung

Wenn der kaschierte Formkörper mechanischer Beanspruchung ausgesetzt ist, ist eine kratzfeste Beschichtung zweckmäßig. Eine Vielzahl von Verfahren zur Verbesserung der Kratzbeständigkeit von Kunststoffoberflächen ist bekannt. Sie beruhen überwiegend auf der Beschichtung der zu schützenden Oberfläche mit einem mehrfach äthylenisch ungesättigten Monomeren und dessen Härtung durch radikalische Polymerisation, z.B. durch die Einwirkung von UV-Strahlung auf einen in der Beschichtung gelösten Photoinitiator. Ein solches System ist z.B. in der DE-PS 29 28 512 beschrieben.

Die Monomeren zur Bildung der kratzfesten Schicht haben wenigstens zwei und selten mehr als sechs polymerisierbare Doppelbindungen. Diese können in Acryloyl-, Methacryloyl-, Vinyl-, Allyl- oder Methallylresten vorliegen. Bevorzugt sind Ester der Acryl-oder Methacrylsäure mit mehrwertigen alphatischen Alkoholen. Diese enthalten in der Regel 2 bis 10 Kohlenstoffatome und 2 bis 6 Hydroxylgruppen, die alle oder zum Teil verestert sein können.

Beispiele solcher Monomerer sind Äthylenglykol-diacrylat und -dimethacrylat, 1,2-Propylenglykol-diacrylat und - dimethacrylat, 1,2- bzw. 1,4-Butylenglykol-diacrylat und -dimethacrylat, Glycerin-triacrylat und -trimethacrylat, Pentaerythrit-tri- und -tetra-acrylat und -methacrylat, Trimethylolpropan-triacrylat und -trimethacrylat sowie die Acrylester von Dipentaerythrit. Da unter den erwähnten Estern die der Acrylsäure schneller und vollständiger polymersieren als die der Methacrylsäure, werden mit besonderem Vorteil allein die Acrylester oder allenfalls Gemische von Acryl- und Methacrylestern verwendet, worin die ersteren deutlich überwiegen und die letzteren höchstens 30, bevorzugt nicht mehr als 15 Gew.-%, ausmachen. Monomere mit Siedepunkten über 140 Grad C sind bevorzugt.

Unter den mehrfunktionellen Monomeren führen diejenigen mit drei oder mehr Kohlenstoff-Doppelbindungen zu einer besonders hohen Vernetzungsdichte und entsprechend guter Kratzfestigkeit. Wegen ihrer meist hohen Viskosität sind sie jedoch in reiner Form bei Raumtemperatur schwer verarbeitbar. Die Viskosität kann durch einen Anteil an difunktionellen Monomeren vermindert werden. Dasselbe läßt sich durch den Zusatz monofunktioneller Monomerer erreichen, die zwar nicht zur Vernetzung beitragen, aber zu einer erhöhten Flexibilität der kratzfesten Schicht führen. Als monofunktionelle Monomere sind beispielsweise Styrol, Acrylnitril, Methacrylnitril, Monoalkylester der Acryl- und Methacrylsäure mit 1 bis 10 C-Atomen im Alkylrest oder mit substituierten Alkylresten, die beispielsweise Hydroxylgruppen als Substituenten tragen können, zu nennen.

Der Anteil der mono- und bifunktionellen Monomeren kann im Interesse einer günstigen Verarbeitungsviskosität und einer hohen Flexibilität der kratzfesten Beschichtung bis auf 70 Gew.-% der Monomermischung gesteigert werden, während der Anteil der drei- oder mehrfunktionellen Monomeren im Interesse einer hohen Kratzfestigkeit nicht unter 30 Gew.-% liegen sollte. Überraschenderweise kann das Monomerengemisch ohne Beeinträchtigung der Kratzfestigkeit bis zu 30 Gew.-% Acrylsäure oder Methacrylsäure enthalten. Die Viskosität des flüssigen Monomerengemisches liegt mit Vorteil nicht über 100 mPa s (gemessen bei 20 Grad C).

Ein anderes Verfahren zur Herstellung einer kratzfesten Beschichtung, die zugleich Antireflexeigenschaften hat, ist aus EP-B 180 129 bekannt. Es beruht auf der Aushärtung einer dünnen Schicht von siliciumorganischen Verbindungen oder Melaminharzen auf der Kunststoffoberfläche. Schließlich kann eine kratzfeste Beschichtung auch durch Plasmapolymerisation von dampfförmigen Silanen oder Siloxanen in Gegenwart oxydierender Gase erzeugt werden.

### Wasserspreitende Beschichtung

Eine typische Anwendungsform der erfindungsgemäßen Folien ist der Schutz von zeichentragenden Oberflächen, um die Erkennbarkeit oder Lesbarkeit der Zeichen unter Bedingungen der Freibewitterung dauerhaft aufrechtzuhalten. Die UV-Schutzwirkung der aufkaschierten Folie gewährleistet den Langzeitschutz gegen Verwitterung der zeichentragenden Oberfläche. Gleichzeitig ist ein kurzfristiger Schutz gegen Verschmutzung sowie gegen eine Beeinträchtigung der Erkennbarkeit durch Regen- oder Tautropfen erforderlich. Dies gilt zum Beispiel für Verkehrszeichen, insbesondere solche mit retroreflektierenden Eigenschaften. Sie setzen eine ebene, saubere Oberfläche und hohe Transparenz der retroreflektierenden Struktur voraus. Diese Anforderungen werden durch eine wasserspreitende Wirkung der Folienoberfläche weitgehend erfüllt. Sie bewirkt, daß Regen- und Tautropfen auf der Folienoberfläche zu einem geschlossenen Wasserfilm spreiten, der einen ungehinderten optischen Strahlengang zu und von der retroreflektierenden Struktur gewährleistet. Zugleich wirkt er der Konzentrierung von Staubpartikeln an den Rändern von Wassertropfen und einer damit einhergehenden Verfestigung von Staub- und Schmutzansammlungen entgegen. An senkrecht stehenden Oberflächen läuft der Wasserfilm kontinuierlich ab und schwemmt Schmutzpartikel mit, so daß sich die Oberfläche selbst reinigt.

Wasserspreitende Beschichtungen für Kunststoffoberflächen sind an sich bekannt. Nach DE-A 21 61 645 werden dafür vernetzte hydrophile Polymerisate verwendet, z.B. Mischpolymerisate aus Alkylestern, Hydroxyalkylestern und quartären Aminoalkylestern der Acryl- und/oder Methacrylsäure und Methyloläthern des Acrylamids oder Methacrylamids als Vernetzungsmittel. Derartige Beschichtungen eignen sich für Anwendungen, bei denen sie keiner mechanischen Belastung ausgesetzt sind. Eine höhere mechanische Beständigkeit läßt sich mit kolloidalem Siliciumoxid oder Metalloxiden erreichen. Nach EP-A 51 405 werden teilhydrolysiertes Silikon und Polyvinylalkohol als Bindemittel für diese kolloidalen Oxide verwendet. Aus der JP-A 83/63 729 ist es bekannt, eine nicht abwaschbare wasserspreitende Beschichtung auf Kunststoffen in zwei Stufen herzustellen. Als Grundbeschichtung wird eine Lösung eines wasserunlöslichen, anionaktiven Polyelektrolyten, gelöst in einem organischen Lösungsmittel, in dünner Schicht aufgetragen. Beispiele sind Mischpolymerisate von Methyl- und Butylmethacrylat und Methacrylasäure oder von Styrol und Maleinsäure. Auf die Grundbeschichtung wird ein wäßriges, elektrisch positiv geladenes anorganisches Kolloidsol aufgebracht, welches durch die Wechselwirkung mit der anionischen Grundbeschichtung adsorbiert wird. Obwohl diese Beschichtung eine gute wasserspreitende Wirkung ausübt, hat sie den Nachteil einer hohen Empfindlichkeit gegen mechanische Beschädigungen.

Ein wasserspreitende Beschichtung für Kunststoffe, aufgebaut aus einer Grundschicht aus einem teilhydrolysierten Vinylchlorid-Vinylacetat-Mischpolymerisat und einer wasserspreitenden Deckschicht aus anorganischen Kolloidteilchen und einem polymeren Bindemittel ist aus EP-A 52 427 bekannt.

Bevorzugt sind wasserspreitende Beschichtungen gemäß EP-B 149 182. Sie zeichnen sich durch eine hohe Wirksamkeit von langandauernder Beständigkeit und durch eine bemerkenswerte Naßscheuerfestigkeit aus. Auch hier ist eine haftvermittelnde Schicht wesentlich; sie besteht aus einem in Wasser nicht löslichen und im wesentlichen nicht quellbaren, in organischen Lösemitteln löslichen, organischen Polymermaterial mit einem Gehalt an polaren Gruppen. Auf diese Schicht ist eine bindemittelfreie Schicht aus Teilchen kolloidaler Größe von Siliciumoxid und/oder einem nicht wasserlöslichen Metalloxid oder einem anionisch modifizierten Siliciumoxid oder Metalloxid aufgebracht. Vorzugsweise ist die haftvermittelnde Schicht 0,01 bis 20 Mikrometer und die wasserspreitende Schicht 0,01 bis 4 Mikrometer dick.

Um retroreflektierende Körper herzustellen, kann die wasserspreitend beschichtete Folie direkt bei deren Herstellung mitverwendet werden oder sie kann nachträglich auf einen fertigen retroreflektierende Körper aufkaschiert werden. Dies ist unter wirtschaftlichen Gesichtspunkten manchmal der bevorzugte Weg. Über den Aufbau retroreflektierende Körper gibt es zahlreiche Patentschriften. Nach US-A 2,407,680 hat eine ebene, die Kügelchen völlig einhüllende transparente Deckschicht gegenüber freiliegenden Kügelchen den Vorteil, daß die Retroreflexionswirkung nicht verlorengeht, wenn die Oberfläche mit Wasser bedeckt ist. Die vorteilhafte Wirkung einer wasserspreitenden Oberfläche wird dort erwähnt.

Für die nachfolgend beschriebenen Beispiele wird eine 0,06 bis 0,1 mm dicke Witterungsschutzfolie aus einem thermoplastischen Kunststoff verwendet, der nach dem Verfahren gemäß Beispiel 3 der Deutschen Patentschrift 38 42 796 hergestellt worden ist. Er besteht aus einem koagulierten und homogenisierten zweiphasigen Emulsionspolymerisat, dessen Latexteilchen 30 Gew.-% eines Kernpolymerisats aus vernetztem Polybutylacrylat und 70 Gew.-% eines Schalenpolymerisats auf Basis von Methylmethacrylat und Butylacrylat enthalten. Das Kernpolymerisat enthält 1 Gew.-% Allylmethacrylat als Vernetzer. Die Teilchengröße beträgt 60 nm bei einer Uneinheitlichkeit U₈₀ = 0,12. Abweichend von dem erwähnten Patentbeispiel enthält das Schalenpolymerisat des Emulsionspolymerisats 3 Gew.-% einpolymerisierte Einheiten von 3-Benzotriazolyl-2-hydroxy-5-tert-octylbenzylmethacrylamid als UV-Absorber.

Die Wärmeformbeständigkeit bzw. die Glastemperatur des Kunststoffes liegen bei 87-90^{o}C. Sein Gehalt an wasserlöslichen Bestandteilen beträgt weniger als 0,05 Gew.-%. Bei einer Dicke von 0,06 mm absorbiert die Folie wenigstens 98 % der auffallenden UV-Strahlung im Bereich von 290-370 nm.

### Beispiel 1

Eine klare farblose Witterungsschutzfolie wurde in an sich bekannter Weise mittels eines Prägekalanders auf eine 0,1 bis 0,2 mm dicke eingefärbte PVC-Folie mit aufgedrucktem Holzmaserdekor aufkaschiert und gleichzeitig mit einer Holzmaserprägung versehen. Unmittelbar vor dem Zusammenführen wurden die zu verbindenden Folienoberflächen mittels Wärmestrahlern erhitzt. Die Kalanderwalzen hatten Temperaturen von 140-160^{o}C. Die erhaltene zweischichtige Dekorfolie wurde mittels eines kalthärtenden Klebers auf ein PVC-Fensterprofil mit Wanddicken vom 1-5 mm aufkaschiert.

Das Profil wurde im Xenotestgerät bewittert. Nach einer Bestrahlungsdauer von 17.500 Stunden war noch keine Veränderung festzustellen. Nach 20.000 Stunden zeigten sich feine Risse, jedoch keine Blasen oder Ablösungen.

### Beispiel 2

Eine klare farblose Witterungsschutzfolie wurde rückseitig mit einem Holzmaserdekor und anschließend mit einem gleichmäßigen Holzfarbton hinterdruckt. Dazu wurde eine handelsübliche klebaktive Druckfarbe auf Basis eines Methylmethacrylat-Butylmethacrylat-Copolymerisats verwendet, die beim Erwärmen klebfähig wird.

Bei der Extrusion eines PVC-Profils wurde die Folie unmittelbar hinter dem Düsenaustritt auf das heiße Profil aufkaschiert und gemeinsam abgekühlt. Nach einer Bewitterung im Xenotestgerät von 10.000 Stunden waren keine Veränderungen, wie Ablösungen oder Blasenbildung, feststellbar.

## Patentansprüche

1. Witterungsbeständige klare Folien mit einer Dicke von 0,05 bis 1 mm aus einem transparenten schlagzähen Kunststoff, enthaltend
A) 10 bis 90 Gew.-% einer zusammenhängenden Hartphase mit einer Glastemperatur über 70 Grad C,
B) 90 bis 10 Gew.-% einer in der Hartphase verteilten Zähphase mit einer Glastemperatur unter -10 Grad C, einer mittleren Teilchengröße der Zähphase unter 130 nm und einer Uneinheitlichkeit der Zähphasen-Teilchengröße von weniger als 0,2, aufgebaut aus mindestens 80 Gew.-% (bez. auf B) eines niederen Alkylacrylats und 0,5 bis 5 Gew.-% eines vernetzenden Monomeren mit zwei oder mehr äthylenisch ungesättigten, radikalisch polymerisierbaren Resten, und gegebenenfalls weiteren üblichen äthylenisch ungesättigten, radikalisch (co)polymerisierbaren, aliphatischen Comonomeren,
C) nicht mehr als 0,05 Gew.-% an wasserlöslichen Bestandteilen,
wobei wenigstens 15 Gew-% der Hartphase mit der Zähphase kovalent verknüpft sind,
dadurch gekennzeichnet,
daß die Hartphase A aus Methylmethacrylat oder dessen Gemisch mit höchstens 20 Gew.-% (bez. auf A) eines n-Alkylacrylats mit 1 bis 4 Kohlenstoffatomen im Alkylrest und zum verbleibenden Teil aus polymerisierten Einheiten eines äthylenisch ungesättigten, radikalisch polymerisierbaren Monomeren mit einer UV-Strahlung absorbierenden Gruppe in einer solchen Menge aufgebaut ist, daß die Folienschicht wenigstens 98 % der einfallenden UV-Strahlung einer Wellenlänge von 290 bis 370 nm absorbiert.

2. Folie nach Anspruch 1, dadurch gekennzeichnet, daß die Zähphase als vernetzendes Monomer einen Pfropfvernetzer oder ein vernetzendes Monomer mit drei oder mehr äthylenisch ungesättigten, radikalisch polymerisierbaren Resten enthält.

3. Folie nach Anspruch 1 oder 2, dadurch gekennzeichnet, daß auf ihrer Oberfläche eine kratzfeste Schicht aus einem stark vernetzten Kunststoff angeordnet ist.

4. Folie nach einem oder mehreren der Ansprüche 1 bis 3, dadurch gekennzeichnet, daß ihre Oberfläche wenigstens zum Teil mit einer wasserspreitenden Schicht überzogen ist.

5. Folie nach Anspruch 4, dadurch gekennzeichnet, daß die wasserspreitende Schicht mit einer Schicht aus einem wasserlöslichen Feststoff überzogen ist.

6. Witterungsbeständig beschichteter Formkörper, enthaltend einen festen Grundkörper und eine auf wenigstens einem Teil seiner Oberfläche haftend angeordnete Folie nach einem oder mehreren der Ansprüche 1 bis 5.

7. Beschichteter Formkörper nach Anspruch 6, dadurch gekennzeichnet, daß die Folie thermisch aufkaschiert ist.

8. Beschichteter Formkörper nach Anspruch 6, dadurch gekennzeichnet, daß die Folie mittels einer druckempfindlichen Kleberschicht auf den Grundkörper aufkaschiert ist.

9. Beschichteter Formkörper nach einem oder mehreren der Ansprüche 6 bis 8, dadurch gekennzeichnet, daß der feste Grundkörper im Bereich der Folienschicht eine retroreflektierende Oberfläche besitzt.

## Claims

1. Weather-resistant clear films having a thickness of 0.05 to 1 mm, consisting of a transparent impact resistant plastics, containing
A) 10 to 90 wt.-% of a cohesive hard phase with a glass transition temperature of over 70°C,
B) 90 to 10 wt.-% of a viscous phase distributed in the hard phase, having a glass transition temperature of below -10°C, an average particle size of the viscous phase of less than 130 nm and a non-uniformity of the viscous phase particle size of less than 0.2, synthesised from at least 80 wt.-% (based on B) of a lower alkyl acrylate and 0.5 to 5 wt.-% of a cross-linking monomer with two or more ethylenically unsaturated, radically polymerisable groups, and optionally other conventional ethylenically unsaturated, radically (co)polymerisable aliphatic comonomers,
C) not more than 0.05 wt.-% of water-soluble ingredients,
wherein at least 15 wt.-% of the hard phase is covalently linked to the viscous phase, characterised in that the hard phase A is made up of methyl methacrylate or a mixture thereof with at most 20% by weight (based on A) of an n-alkyl acrylate having 1 to 4 carbon atoms in the alkyl moiety and, for the remainder, of polymerised units of an ethylenically unsaturated, radically polymerisable monomer with a UV-radiation-absorbing group in a quantity such that the film layer absorbs at least 98% of the incident UV-radiation of a wavelength of 290 to 370 nm.

2. Film according to claim 1, characterised in that the viscous phase contains, as cross-linking monomer, a graft cross-linker or a cross-linking monomer with three or more ethylenically unsaturated, radically polymerisable groups.

3. Film according to claim 1 or 2, characterised in that a scratch resistant coating of a strongly crosslinked plastics is arranged on the surface thereof.

4. Film according to one or more of claims 1 to 3, characterised in that its surface is at least partly coated with a water-repellant coating.

5. Film according to claim 4, characterised in that the water-repellant coating is covered with a layer of a water-soluble solid material.

6. Moulding with a water-resistant coating, containing a solid substrate and a film according to one or more of claims 1 to 5 adhesively mounted over at least part of its surface.

7. Coated moulding according to claim 6, characterised in that the film is applied by thermal lamination.

8. Coated moulding according to claim 6, characterised in that the film is laminated onto the substrate by means of a pressure-sensitive adhesive layer.

9. Coated moulding according to one or more of claims 6 to 8, characterised in that the solid substrate has a retro-reflective surface in the region of the film coating.

## Revendications

1. Feuilles transparentes résistantes aux intempéries ayant une épaisseur de 0,05 à 1 mm de matière plastique résistante aux chocs, transparente contenant
A) 10 à 90 % en poids d'une phase dure continue ayant une température de transition vitreuse supérieure à 70°C,
B) 90 à 10 % en poids d'une phase résistante aux chocs répartie dans la phase dure avec une température de transition vitreuse inférieure à -10°C, une taille de particules moyenne inférieure à 130 nm et une hétérogénéité de tailles de particules de la phase résistante aux chocs inférieure à 0,2, constituée d'au moins 80 % en poids (par rapport à B) d'un acrylate d'alkyle inférieur et de 0,5 à 5 % en poids d'un monomère réticulant ayant deux restes ou plus, éthyléniquement insaturés, polymérisables par voie radicalaire, et le cas échéant d'autres comonomères usuels aliphatiques éthyliquement insaturés, (co)polymérisables par voie radiculaire,
C) pas plus de 0,05 % en poids de composants hydrosolubles, où au moins 15 % en poids de la phase dure sont liés de façon covalente à la phase résistant au choc,
caractérisées en ce que
la phase A est constituée de méthacrylate de méthyle ou de son mélange avec au plus 20 % en poids (par rapport à A) d'un acrylate de n-alkyle ayant 1 à 4 atomes de carbone dans le radical alkyle et pour la partie restante des motifs polymérisés d'un monomère éthyléniquement insaturé, polymérisable par voie radicalaire avec un groupe absorbant le rayonnement UV, en quantité telle que la couche de feuille absorbe au moins 98 % du rayonnement UV incident d'une longueur d'onde comprise entre 290 et 370 nm.

2. Feuille selon la revendication 1,
caractérisée en ce que
la phase résistante aux chocs contient comme monomère réticulant un agent de réticulation pour greffage ou un monomère réticulant ayant trois groupes ou plus éthyléniquement insaturés, polymérisables par voie radicalaire.

3. Feuille selon la revendication 1 ou 2,
caractérisée en ce qu'
on dépose à sa surface une couche résistante à la rayure en matière plastique fortement réticulée.

4. Feuille selon l'une ou plusieurs des revendications 1 à 3,
caractérisée en ce que
sa surface est revêtue au moins en partie d'une couche étalant l'eau.

5. Feuille selon la revendication 4,
caractérisée en ce que
la couche étalant l'eau est revêtue d'une couche de solide hydrosoluble.

6. Corps moulé revêtu rendu résistant aux intempéries, comprenant un corps de base solide et une feuille disposée par collage sur au moins une partie de sa surface selon une ou plusieurs des revendications 1 à 5.

7. Corps moulé revêtu selon la revendication 6,
caractérisé en ce que
la feuille est plaquée thermiquement.

8. Corps moulé revêtu selon la revendication 6,
caractérisé en ce qu'
on plaque la feuille au moyen d'une couche d'adhésif sensible à la pression sur le corps de base.

9. Corps moulé revêtu selon l'une ou plusieurs des revendications 6 à 8,
caractérisé en ce que
le corps de base solide dans le domaine de la couche de feuille possède une surfaces rétroréfléchissante.
